Europäisches Patentamt

(19) European Patent Office

Office européen des brevets

(11) Publication number: **0 093 464**
**B1**

(12) EUROPEAN PATENT SPECIFICATION

(45) Date of publication of patent specification: **10.09.86**

(51) Int. Cl.⁴: **C 08 F 10/00,** C 08 F 4/64

(21) Application number: **83200525.0**

(22) Date of filing: **13.04.83**

(54) **Process of preparing a solid catalytic titanium component and process for the polymerization of 1-alkenes using such a titanium component.**

(30) Priority: **15.04.82 NL 8201574**

(43) Date of publication of application:
**09.11.83 Bulletin 83/45**

(45) Publication of the grant of the patent:
**10.09.86 Bulletin 86/37**

(84) Designated Contracting States:
**AT BE DE FR GB IT NL SE**

(56) References cited:
**EP-A-0 007 545**
**GB-A-2 047 255**

(73) Proprietor: **STAMICARBON B.V.**
**Mijnweg 1**
**NL-6167 AC Geleen (NL)**

(72) Inventor: **Loontjens, Jacobus Antonius**
**Synagogeplantsoen 76**
**NL-6231 KK Meerssen (NL)**
Inventor: **Muskens, Bernardus Johanna**
**Gansbeek 64**
**NL-6166 JB Geleen (NL)**

(74) Representative: **van Golde, Lambertus Maria**
**Gerardus T. et al**
**OCTROOIBUREAU DSM P.O. Box 9**
**NL-6160 MA Geleen (NL)**

Courier Press, Leamington Spa, England.

## Description

The invention relates to a process of preparing a solid catalytic titanium component for the polymerization of 1-alkenes and for the copolymerization of 1-alkenes with each other and/or with ethylene, in which process a complex of titanium halide compound and an electron donor compound is ground with a magnesium aluminium halide obtained by precipitation from an organic solvent, and to a process for the polymerization of 1-alkenes and for the copolymerization of 1-alkenes with each other and/or with ethylene using such a titanium component.

The expression 'magnesium aluminium halide' is used here in the sense of a combination of a magnesium halide and an aluminium halide as an intimate mixture, a cocrystalline compound, a complex, a solid solution or the like. The magnesium aluminium halide may in addition contain other components.

A process as described in the preamble is known from UK Patent Publication No. 2,047,255 A. According to European Patent Publication No. 33,022 A 1, in order to lower the halogen content and the titanium content of the polymer to be obtained the product of said grinding step is as a suspension in an inert organic dispersant treated with an organic aluminium compound which is soluble in the dispersant, after which the solid obtained is separated out and used as a finished catalytic titanium component.

It has now been found that, specifically with catalysts for the (co)polymerization of alkenes on the basis of the grinding product of a complex of a titanium halide compound and an electron donor compound with a magnesium aluminium halide obtained by precipitation, the catalyst properties with respect to activity and stereospecificity can be considerably improved by washing said grinding product with a solvent for the complex of the aluminium halide concerned and the electron donor compound concerned, and treating the washed product with a liquid titanium halide compound.

Although the invention is not restricted by any theoretical consideration, be it stated that it is assumed that during the grinding a reaction occurs between the aluminium halide and the titanium-halide-compound/electron-donor complex, in which the electron donor is detached from the titanium halide compound and forms a complex with the aluminium halide. The object of the washing step is to remove the aluminium-halide/electron-donor complex formed. Next, titanium halide is taken up in the recesses formed.

According to the invention a solid catalytic titanium component for the polymerization of 1-alkenes and for the copolymerization of 1-alkenes with each other and/or with ethylene is prepared, a complex of a titanium halide compound and an electron donor compound being ground with a magnesium aluminium halide obtained by precipitation from an organic solvent, the preparation being characterized in that the grinding product is washed with a solvent for the complex of the aluminium halide concerned and the electron donor compound concerned, and the washed product is treated with a liquid titanium halide compound.

The titanium component obtained with the process according to the invention imparts to the polymerization catalyst a good stereospecificity besides a very high activity. With this catalyst it is possible to obtain polymers, for example polypropylene, with a very low halogen content and a very low titanium content, so that a washing step after the polymerization can be dispensed with. Moreover, the polymer has a good particle size and a good particle size distribution. On account of this, the polymer is readily processable and little corrosive with respect to the processing equipment.

In the complex with an electron donor, any titanium halide compound can be used, including compounds in which part of the titanium valencies is used for bonds other than to halogen atoms. The halogen in the titanium halide compound is preferably chlorine, but may also be, for example, bromine and/or iodine. By preference, the titanium halide compound is derived from tetravalent titanium. Examples are $TiCl_4$, $TiBr_4$, $TiI_4$ and $Ti(isobutoxy)_2Cl_2$. $TiCl_4$ is particularly suitable. For use in multi-stage polymerizations, in particular those in which normally more than half an hour is required for polymerization in the first stage before a second stage is started, the titanium halide diphenolates have particular advantages. For brevity's sake, the UK Patent Publication No. 2,047,255 A already mentioned is referred to for further details concerning the titanium halide compounds to be used. If so desired, also a titanium halide compound of trivalent titanium may be used, e.g. $TiCl_3$.

As electron donor in the titanium complex use can be made of, for example, oxygen-containing electron donors such as alcohols, phenols, ketones, aldehydes, acid halides, carboxylic acids, esters, ethers and acid amides, phosphorus-containing electron donors such as phosphines, phosphites and phosphates, or nitrogen-containing electron donors such as amines, nitriles, isocyanates and nitro compounds. For specific examples, UK Patent Publication No. 2,047,255 A is again referred to. Ethers with 2—20 carbon atoms per molecule, for example dimethyl ether, diethyl ether, di-n-butyl ether, di-i-amyl ether, tetrahydrofuran, anisole or diphenyl ether, and in particular organic esters with 2—40, in particular 2—18 carbon atoms per molecule, are preferred. The acid component of the esters normally contains 1—9 carbon atoms per molecule or is a natural fatty acid, and the alcohol component of the ester normally contains 1—6 carbon atoms per molecule.

Examples of suitable esters are methyl formate, cyclohexyl formate, ethyl acetate, vinyl acetate, amyl acetate, 2-ethyl hexyl acetate, cyclohexyl acetate, ethyl propionate, amyl propionate, methyl butyrate, ethyl valerate, methyl chloroacetate, ethyl dichloroacetate, methyl methacrylate, ethyl acrylate, n-butyl acrylate, ethyl crotonate, dimethyl maleate, ethyl cyclohexane, carboxylate, methyl benzoate, ethyl benzoate, i-butyl benzoate, octyl benzoate, cyclohexyl benzoate, phenyl benzoate, benzyl benzoate, phenyl ethyl benzoate, methyl toluate, ethyl toluate, i-amyl toluate, methyl anisate, ethyl anisate, γ-butyrolactone, ε-caprolactone, coumarin, phtalide and ethylene carbonate. Particularly preferred are esters derived from aromatic acids, in particular esters of benzoic acid substituted or not with alkyl or alkoxy groups. Alkyl esters with 1—4 carbon atoms per alkyl group, in particular methyl or ethyl esters of benzoic acid, o- or p-toluene carboxylic acid or p-methoxy benzoic acid are particularly preferred.

The magnesium aluminium halide to be used, which has been obtained by precipitation from an organic solvent, should be at least virtually water-free and preferably also at least virtually magnesium-oxide-free.

By the expressions 'at least virtually water-free' and 'at least virtually magnesium-oxide-free' is meant here that the concentrations of water and magnesium oxide, respectively, in the support material are insignificant, as regards water at any rate less than 0.2 per cent by weight, preferably not more than 0.1 per cent by weight, and as regards magnesium oxide at any rate less than 0.1, preferably not more than 0.01, calculated as mgeq of base titratable with dilute strong acid, for example 0.1 N hydrochloric acid, per gram of support material.

The magnesium aluminium halide may in addition contain minor amounts of other metal ions, e.g. sodium, tin, silicon or germanium. The magnesium: aluminium weight ratio is preferably 1:1 to 100:1, in particular 3:1 to 20:1. The halogen is preferably chlorine, but may also be, for example, bromine or iodine or a mixture of halogens.

According to a preferred mode of realization of the process according to the invention a magnesium aluminium halide is used which has been obtained by reacting a combination of an organic aluminium compound and an organic magnesium compound with a halogenating agent having the formula $RX_m$, where R denotes a hydrocarbon, a hydrogen atom or a halogen atom, X denotes a halogen atom, and m is an integer of 1—10. The compound $RX_m$ may be a hydrogen halide, for example in the form of the water-free gas, or, for example, an aliphatic halogen compound with, for example, 1—8 carbon atoms per molecule. Preferably, a hydrogen halide or else an alkyl halide is used. Examples are methyl chloride, methylene chloride, chloroform, ethyl bromide, ethyl dichloride, i-propyl chloride, n-butyl iodide and the like.

As precipitation agent, also free halogens and interhalogen compounds can be used, e.g. $Cl_2$, $Br_2$, $I_2$, ICl, $ICl_3$ or BrCl.

The organic aluminium compound preferably contains one or more hydrocarbon groups bonded direct to the metal. The hydrocarbon groups preferably contain 1—10 carbon atoms. Examples are trialkyl or trialkenyl aluminium compounds, e.g. triethyl aluminium, tripropyl aluminium, triisobutyl aluminium, triisoprenyl aluminium, trihexyl aluminium and trioctyl aluminium; dialkyl aluminium hydrides, e.g. diethyl aluminium hydride or diisobutyl aluminium hydride; dialkyl aluminium halides, in particular a chloride or bromide, diethyl aluminium chloride and diethyl aluminium bromide being particularly suitable, but di-n-butyl aluminium chloride or methyl-n-butyl aluminium chloride, for example, also being usable; and (mono)alkyl aluminium dihalides, for example ethyl aluminium dichloride, n-butyl aluminium dichloride or n-hexyl aluminium dibromide. If a halogen-containing organic aluminium compound is used, the halogen is preferably the same as the one in the halogenating agent used. Trialkyl aluminium compounds are preferred.

The organic magnesium compound may be, for example, a dialkyl magnesium or an alkyl magnesium halide. The hydrocarbon groups again preferably contain 1—10 carbon atoms. Examples are ethyl magnesium chloride, n-butyl magnesium chloride, i-propyl magnesium bromide, n-decyl magnesium iodide, ethyl-n-butyl magnesium, di-n-butyl magnesium, di-i-amyl magnesium and di-n-octyl magnesium.

The conversion of the organometallic compounds into the magnesium aluminium halide is effected by precipitation of the magnesium aluminium halide from a solution of the organometallic compounds in a suitable solvent. Examples of suitable solvents are aliphatic, cycloaliphatic, aromatic and mixed aromatic/aliphatic hydrocarbons with 3—8 carbon atoms, per molecule, e.g. butane, i-butane, n-hexane, n-heptane, cyclohexane, benzene, toluene and the xylenes, which hydrocarbons are preferably inert under the reaction conditions.

Further details concerning this preferred mode of realization are described in UK Patent Publication 2,047,255 A. With the preferred mode of realization, a very important improvement of the activity of the catalyst can be achieved, besides a high stereospecificity.

According to a very suitable method the complexed titanium halide compound and the magnesium aluminum halide prepared as described above are then mixed and the mixture is ground in a ball mill for a period between about 5 hours and about 50 hours. The grinding product is then washed with a suitable solvent and treated with a liquid titanium halide compound to form the finished catalyst component.

The titanium content of the grinding product and also of the finished titanium component is usually between 0.1 and 10 per cent by weight. The titanium: magnesium: aluminium weight ratio is preferably 1:(0.5—20):(0.1—5), more in particular 1:(0.5—2.5):(0.2—1). The electron donor is present in the titanium component in an amount of, for example 0.1 to 5 molecules per titanium atom. A typical example of the various contents in the titanium component, although they vary depending on the conditions for the catalyst preparation, is 2—10 per cent by weight of titanium, 16—25 per cent by weight of magnesium, 0.5—4.0 per cent by weight of aluminium, 45—65 per cent by weight of halogen and 5—25 per cent by weight of the electron donor.

In the process according to the invention, the grinding product obtained is washed with a solvent for the complex between the aluminium halide concerned and the electron donor compound concerned.

Examples of the solvents preferably used in this washing step are liquid (at the temperature and pressure employed) aliphatic, cycloaliphatic, aromatic and mixed aromatic/aliphatic hydrocarbons with 4—12 carbon atoms per molecule, such as butane, isobutane, n-hexane, n-heptane, cyclohexane, tetralin, decalin, benzene, toluene and the xylenes. Also halogenated hydrocarbons can be used, e.g. $CCl_4$ or $C_2Cl_6$. If so desired, the solvent may contain harmless additives.

The washing treatment is carried out at a temperature of, for example, 250—425 K, preferably 330—380 K. The pressure is not critical and is, for example, 10—1000 kPa. The amount of washing liquid is, for example, 5—1000, preferably 10—100 grams per gram of grinding product. The washing conditions are such that a substantial quantity of the aluminium-halide/electron-donor complex is removed from the grinding product. Under such conditions, also some titanium disappears from the grinding product.

The washed grinding product is treated with a liquid titanium halide compound. The liquid titanium halide compound may be an undiluted titanium halide compound which is liquid as such, or a liquid solution of a titanium halide compound in a suitable solvent. Compounds of tetravalent titanium are the most suitable. For examples of suitable titanium halide compounds, reference is made to what has been said above concerning the titanium halide compound used in the complex with the electron donor. Here too, $TiCl_4$ is particularly suitable. As solvent for the titanium halide compound the same solvents may be used as those mentioned above for the washing procedure.

The treatment with the liquid titanium halide compound is effected at a temperature of, for example, 250—425 K, preferably 320—370 K. The pressure is not critical and is, for example, 10—1000 kPa. The amount of liquid titanium halide compound, expressed as the number of mmoles of Ti per gram of washed grinding product, is, for example, 1—1000 mmoles/gram, preferably 10—100 mmoles/gram. Amounts larger than 1 mole per gram may be used but offer no advantage.

After this treatment, the titanium component is preferably after-washed with an organic solvent. As such, the same solvents are suitable as the ones already mentioned.

In the finished polymerization catalyst the titanium component is used in combination with an organometallic component derived from a metal from anyone of the groups I—III of the Periodic System with a hydrocarbon group bonded direct to the metal. Examples are trialkyl aluminium compounds, alkyl aluminium alkoxides, alkyl aluminium hydrides, alkyl aluminium halides, dialkyl zinc compounds and dialkyl magnesium compounds. Among these, the organoaluminium compounds are particularly suitable. Examples of the organoaluminium compounds are trialkyl or trialkenyl aluminium compounds, e.g. triethyl aluminium, tripropyl aluminium, triisobutyl aluminium, triisoprenyl aluminium, trihexyl aluminium and trioctyl aluminium; alkyl aluminium compounds in which a number of the aluminium atoms are interconnected by means of an oxygen or nitrogen atom, e.g. $(C_2H_5)_2AlOAl(C_2H_5)_2$, $(i-C_4H_9)_2AlOAl(i-C_4H_9)_2$ or $(C_2H_5)_2AlNHAl(C_2H_5)_2$; dialkyl aluminium hydrides such as diethyl aluminium hydride or diisobutyl aluminium hydride; dialkyl aluminium halides, in particular a chloride or bromide, diethyl aluminium chloride and diethyl aluminium bromide being particularly suitable, but other dialkyl aluminium halides with preferably 1—10 carbon atoms in the alkyl group, such as, for example, di-n-butyl aluminium chloride and methyl-n-butyl aluminium chloride, also being usable; and dialkyl aluminium alkoxides or dialkylaluminium phenoxides, e.g. diethyl ethoxy aluminium or diethyl phenoxy aluminium. The trialkyl aluminium compounds are most preferred.

Also, the organometallic component may contain a trialkyl aluminium compound as well as a dialkyl aluminium halide or a mixture of a dialkyl magnesium compound and a monoalkyl aluminium dihalide. The alkyl groups of the metal alkyl compounds preferably contain 1—10 carbon atoms each or are a palmityl or stearyl group.

The organometallic component preferably comprises a complex of an organometallic compound, in particular a trialkyl aluminium compound, with an ester of an oxygen-containing organic acid. As ester, the same esters are available which may also be used in the titanium component, again in particular the ester of aromatic carboxylic acids. By preference, a portion of the organometallic compound, e.g. 50—90%, is present in a non-complexed state.

The Al: Ti atomic ratio is normally between 50 and 1000; the molecular-atomic ratio of total bound Lewis base in the catalyst to Ti is normally between 1 and 200.

The process according to the invention finds application especially in the stereospecific polymerization of 1-alkenes with 3—6 carbon atoms per molecule, such as propylene, 1-butylene, 4-methyl-1-pentene and 1-hexene, and in the copolymerization of these 1-alkenes with each other and/or with ethylene. Copolymers with a random distribution of the various monomer units as well as block copolymers can be prepared. If ethylene is used as comonomer, it is normally copolymerized in minor amounts, for example at most 30, more in particular between 1 and 15 per cent by weight. The process according to the invention is especially important for the preparation of isotactic polypropylene, random copolymers of propylene with minor quantities of ethylene and block copolymers from propylene and ethylene. For the preparation of block copolymers, any desired order of monomer addition may be applied.

The conditions under which the polymerization reaction with the catalytic titanium component according to the invention is carried out do not differ from those known in the art. The reaction may be carried out in the gas phase or in the presence of a dispersant. The dispersant may be inert or a monomer in liquid form. Examples of suitable dispersants are aliphatic hydrocarbons with 3—8 carbon atoms per molecule, such as propylene, 1-butylene, butane, isobutane, n-hexane, n-heptane, cyclohexane, benzene, toluene and the xylenes.

In the polymerization in the liquid phase, the concentration of the titanium component is preferably set at about 0.001—0.5 mmoles, calculated as titanium atoms, and the concentration of the organometallic compound at about 0.1—50 mmoles, both per litre of liquid phase.

The polymerization temperature is normally between 190 and 475 K, preferably between 310 and 375 K. The pressure may be between 100 and 3000 kPa, for example.

If so desired, during the polymerization the molecular weight of the polymer may be regulated, for example by carrying out the polymerization in the presence of hydrogen or another known molecular weight regulator.

The polymerization reaction may be carried out batchwise as well as continuously.

The invention is explained by the following non-restricting examples and comparative experi-ments.

### Example I
*A.1 Catalyst preparation*

6.5 ml of water-free ethyl benzoate (EB) dissolved in 75 ml water-free gasoline, is added dropwise to a solution of 5 ml $TiCl_4$ in 125 ml gasoline at 273 K. A precipitate of the complex $TiCl_4.EB$ is formed, which is isolated by filtration, and is washed with water-free gasoline and dried.

100 ml of a solution in gasoline containing 0.3 moles of dibutyl magnesium and 0.1 moles of triethyl aluminium per litre is introduced into a nitrogen-purged three-neck flask provided with a mechanical stirrer and a reflux condenser. A stream of dry HCl gas is passed in, a yellowish precipitate being formed. The precipitate is isolated by filtration, and is washed and dried.

The composition of the product (magnesium aluminium chloride) is 18.4 per cent by weight of Mg, 5.5 per cent by weight of Al, 70.0 per cent by weight of Cl and 6.1 per cent by weight of organic material.

2.8 grams of the aluminium chloride obtained and 2.3 grams of $TiCL_4.EB$, in that order, are introduced into a stainless steel ball mill with a capacity of 0.8 litres. This mixture is ground for 18 hours.

*A.2 Treatment of solid component*

About 1 gram of the conglomerate obtained is suspended in 20 ml gasoline. The temperature is raised to 333 K and maintained at this value for 2 hours. Then the suspension is filtered off and the solid matter is washed with gasoline of 333 K.

The solid matter is then suspended in 10 grams of $TiCl_4$. After the solid matter has been in contact with $TiCl_4$ for 2 hours at 333 K, the suspension is filtered off and washed with gasoline of 333 K. Finally, the titanium component thus obtained is dried.

*B. Polymerization*

2.5 litres of gasoline are supplied to a stainless steel reactor purged with nitrogen and provided with a mechanical stirrer. Separately, 6.25 mmoles of triethyl aluminium, 1.25 mmoles of methyl-p-toluate and 0.15 grams of the titanium component obtained according to A2 are mixed together for 5 minutes in 50 millilitres of gasoline. After this suspension has been fed to the reactor, hydrogen and propylene are fed in to partial pressures of 50 and 650 kPa respectively. The temperature of the reactor is raised to 333 K and maintained at that value. After a period of polymerization of 2 hours, the polymer is isolated by centrifugation.

The polymerization activity is 7010 grams of polypropylene per gram of titanium component, the soluble-polymer content is 4.0% and the bulk density is 0.38 grams per millilitre.

*Comparative example A*

The polymerization is carried out in the same way as described in Example IB, but this time 0.2 grams of the solid as obtained in IA1 is used as catalyst. The polymerization activity is now 4950 grams of polypropylene per gram of titanium component, the soluble-polymer content is 5.6 percent by weight and the bulk density is 0.34 grams per millilitre.

**Claims**

1. Process of preparing a solid catalytic titanium component for the polymerization of 1-alkenes and for the copolymerization of 1-alkenes with each other and/or with ethylene, a complex of a titanium halide compound and an electron donor compound being ground with a magnesium aluminium halide obtained by precipitation from an organic solvent, the process being characterized in that the grinding product is washed with a solvent for the complex between the aluminium halide concerned and the electron donor concerned, and the washed product is treated with a liquid titanium halide compound.

2. Process according to claim 1, characterized in that washing is effected with an aliphatic, cycloaliphatic, aromatic or mixed aromatic/aliphatic hydrocarbons with 4—12 carbon atoms per molecule.

3. Process according to claim 1 or 2, characterized in that 5—1000, preferably 10—100 grams of washing agent are used per gram of grinding product.

4. Process according to any one of the claims 1—3, characterized in that the washing treatment is carried out at a temperature of 250—425 K, preferably 330—380 K.

5. Process according to any one of the claims 1—4, characterized in that the washed grinding product is treated with $TiCl_4$.

6. Process according to any one of the claims 1—5, characterized in that the washed grinding product is treated with an amount of liquid titanium halide compound, expressed as the number of mmoles of Ti per gram of washed grinding product, of 1—1000 mmoles/g, preferably 10—100 mmoles/g.

7. Process according to any one of the claims 1—6, characterized in that the magnesium aluminium halide has been obtained by precipitation of the corresponding metal halide from a solution of the combination of an organic aluminium compound and an organic magnesium compound by a halogenating agent having the formula $RX_m$, where R is a hydrocarbon radical, a hydrogen atom or a halogen atom, X is a halogen atom, and m is an integer of 1—10.

8. Process according to any one of the claims 1—7, characterized in that the magnesium: aluminium weight ratio in the magnesium aluminium halide is 1:1 to 100:1, in particular 3:1 to 20:1.

9. Process according to any one of the claims 1—8, characterized in that the finished titanium component contains titanium, magnesium and aluminium to a weight ratio of 1:(0.5—20):(0.1—5).

10. Process according to claim 9, characterized in that the titanium: magnesium: aluminium weight ratio is 1:(0.5—2.5):(0.2—1).

11. Process for the polymerization of 1-alkenes and for the copolymerization of 1-alkenes with each other and/or with ethylene using a catalyst system comprising a solid catalytic titanium component and an organometallic component derived from a metal from any one of the groups I—III of the Periodic System of Elements, the process being characterized in that a titanium component is used which has been prepared by the process according to any one of the claims 1—10.

12. Process according to claim 11, characterized in that the organometallic component contains a complex of an organometallic compounds with an ester of an oxygen-containing organic acid.

**Patentansprüche**

1. Verfahren zur Herstellung einer festen katalytischen Titankomponente für die Polymerisation von 1-Alkenen und für die Copolymerisation von 1-Alkenen miteinander und/oder mit Äthylen, wobei ein Komplex einer Titanhalogenidverbindung und einer Elektronendonatorverbindung mit einem durch Ausfällung aus einem organischen Lösungsmittel erhaltenen Magnesiumaluminiumhalogenid vermahlen wird, welches Verfahren dadurch gekennzeichnet ist, daß das Mahlprodukt mit einem Lösungsmittel für den Komplex zwischen dem betreffenden Aluminiumhalogenid und dem betreffenden Elektronendonator gewaschen wird, und das gewaschene Produkt mit einer flüssigen Titanhalogenidverbindung behandelt wird.

2. Verfahren nach Anspruch 1, dadurch gekennzeichnet, daß das Waschen mit einem aliphatichen, cycloaliphatischen, aromatischen oder gemischten aromatish-aliphatischen Kohlenwasserstoff mit 4—12 Kohlenstoffatomen je Molekül vorgenommen wird.

3. Verfahren nach Anspruch 1 oder 2, dadurch gekennzeichnet, daß 5—1000, vorzugsweise 10—100 Gramm Wachmittel je Gramm Mahlprodukt verwendet werden.

4. Verfahren nach einem der Ansprüche 1—3, dadurch gekennzeichnet, daß die Waschbehandlung bei einer Temperatur von 250—425 K, vorzugsweise 330—380 K durchgeführt wird.

5. Verfahren nach einem der Ansprüche 1—4, dadurch gekennzeichnet, daß das gewaschene Mahlprodukt mit $TiCl_4$ behandelt wird.

6. Verfahren nach einem der Ansprüche 1—5, dadurch gekennzeichnet, daß das gewaschene Mahlprodukt mit einer Menge flüssiger Titanhalogenidverbindung, ausgedrückt als die Zahl der mMol Titan je Gramm gewaschenes Mahlprodukt, von 1—1000 mMol/g, vorzugsweise 10—100 mMol/g, behandelt wird.

7. Verfahren nach einem der Ansprüche 1—6, dadurch gekennzeichnet, daß das Magnesiumaluminiumhalogenid erhalten worden ist durch Ausfällung des entsprechenden Metallhalogenids aus einer Lösung der Kombination einer organischen Aluminiumverbindung und einer organischen Magnesiumverbindung mittels eines Halogenierungsmittles der Formel $RX_m$, worin R ein Kohlenwasserstoffrest, ein Wasserstoffatom oder ein Halogenatom ist, X ein Halogenatom ist, und m eine ganze Zahl von 1—10 ist.

8. Verfahren nach einem der Ansprüche 1—7, dadurch gekennzeichnet, daß das Gewichtsverhältnis Magnesium:Aluminium im Magnesiumaluminiumhalogenid 1:1 bis 100:1, insbesondere 3:1 bis 20:1 beträgt.

9. Verfahren nach einem der Ansprüche 1—8, dadurch gekennzeichnet, daß die fertige Titankomponente Titan, Magnesium und Aluminium in Gewichtsverhältnis von 1:(0,5—20):(0,1—5) enthält.

10. Verfahren nach Anspruch 9, dadurch gekennzeichnet, daß das Gewichtsverhältnis Titan:Magnesium:Aluminium 1:(0,5—2,5):(0,2—1) beträgt.

11. Verfahren zur Polymerisation von 1-Alkenen und zur Copolymerisation von 1-Alkenen miteinander und/oder mit Äthylen unter Verwendung eines Katalysatorsystems umfassend eine feste katalytische Titankomponente und eine organometallische Komponente, abgeleitet von einem Metall aus einer der Gruppen I—III des Periodensystems, welches Verfahren dadurch gekennzeichnet ist, daß eine Titankomponente verwendet wird, die nach dem Verfahren gemäß einem derAnsprüche 1—10 hergestellt worden ist.

12. Verfahren nach Anspruch 11, dadurch gekennzeichnet, daß die organometallische Komponente einen Komplex einer organometallischen Verbindung mit einem Ester einer sauerstoffhältigen organischen Säure enthält.

## Revendications

1. Procédé de préparation d'un composant catalytique solide à base de titane pour la polymérisation des 1'alcènes et pour la copolymérisation des 1'alcènes l'un avec l'autre et/ou avec l'éthylène, un complexe d'un composé d'halogénure de titane et d'un composé donneur d'électrons étant broyé avec un halogénure de magnésium et d'aluminium obtenu par précipitation dans un solvant organique, le procédé étant caractérisé en ce que le produit de broyage est lavé avec un solvant du complexe entre l'halogénure d'aluminium concerné et le composé donneur d'électrons concerné et en ce que le produit lavé est traité avec un composé d'halogénure de titane liquide.

2. Procédé selon la revendication 1, caractérisé en ce que le lavage est effectué avec un hydrocarbure aliphatique, cycloaliphatique, aromatique ou mélangé aromatique/aliphatique ayant 4—12 atomes de carbone par molécule.

3. Procédé selon la revendication 1 ou 2, caractérisé en ce que 5—1000, de préférence 10—100 grammes d'agent de lavage sont utilisés par gramme de produit de broyage.

4. Procédé selon l'une quelconque des revendications 1—3, caractérisé en ce que le traitement de lavage est réalisé à une température de 250—425 K, de préférence de 330—380 K.

5. Procédé selon l'une quelconque des revendications 1—4, caractérisé en ce que le produit de broyage lavé est traité avec TiCl$_4$.

6. Procédé selon l'une quelconque des revendications 1—5, caractérisé en ce que le produit de broyage lavé est traité avec une quantité de composé d'halogénure de titane liquide, exprimée en nombre de mmoles de Ti par gramme de produit de broyage lavé, de 1—1000 mmoles/g, de préférence de 10—100 mmoles/g.

7. Procédé selon l'une quelconque des revendications 1—6, caractérisé en ce que l'halogénure de magnésum et d'aluminium a été obtenu par précipitation de l'halogénure métallique correspondant dans une solution de la combinaison d'un composé organique d'aluminium et d'un composé organique de magnésium par un agent d'halogénation ayant pour formule RX$_m$, dans laquelle R est un radical hydrocarbure, un atome d'hydrogène ou un atome d'halogène, X est un atome d'halogène et m est un nombre entier de 1—10.

8. Procédé selon l'une quelconque des revendications 1—7, caractérisé en ce que le rapport pondérale magnésium: aluminium dans l'halogénure de magnésium et d'aluminium est de 1:1 à 100:1, en particulier de 3:1 a 20:1.

9. Procédé selon l'une quelconque des revendications 1—8, caractérisé en ce que le composant à base de titane fini contient du titane, du magnésium et de l'aluminium en proportion pondérale de 1:(0,5—20):(0,1—5).

10. Procédé selon la revendication 9, caractérisé en ce que la proportion pondérale titane: magnésium: aluminium est de 1:(0,5—2,5):(0,2—1).

11. Procédé pur la polymérisation des 1'alcènes et pour la copolymérisation des 1'alcènes l'un avec l'autre et/ou avec l'éthylène en utilisant un système catalyseur comprenant un composant catalytique solide à base de titane et un composant organométallique dérivé d'un métal appartenant à l'un quelconque des groups I—III de la Classification Périodique des Eléments, le procédé étant caractérisé en ce que l'on utilise un composant à base de titane qui a été préparé par le procédé selon l'une quelconque des revendications 1—10.

12. Procédé selon la revendication 11, caractérisé en ce que le composant organométallique contient un complexe d'un composé organométallique avec un ester d'un acide organique oxygéné.